(19) Europäisches Patentamt / European Patent Office / Office européen des brevets

(11) **EP 3 317 101 B1**

(12) **EUROPEAN PATENT SPECIFICATION**

(45) Date of publication and mention
of the grant of the patent:
**25.11.2020 Bulletin 2020/48**

(21) Application number: **16734531.3**

(22) Date of filing: **22.06.2016**

(51) Int Cl.:
**B32B 27/08** (2006.01)     **B32B 27/32** (2006.01)

(86) International application number:
**PCT/US2016/038605**

(87) International publication number:
**WO 2017/003775 (05.01.2017 Gazette 2017/01)**

(54) **MULTI-LAYERED FILMS ORIENTED IN THE MACHINE DIRECTION AND ARTICLES COMPRISING THE SAME**

IN MASCHINENRICHTUNG AUSGERICHTETE MEHRSCHICHTFOLIEN UND ARTIKEL DAMIT

FILMS MULTICOUCHES ORIENTÉS DANS LA DIRECTION DE LA MACHINE ET ARTICLE LES COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2015 US 201562187122 P**

(43) Date of publication of application:
**09.05.2018 Bulletin 2018/19**

(73) Proprietor: **Dow Global Technologies LLC
Midland, MI 48674 (US)**

(72) Inventor: **BARRENECHE, Felipe Martinez
Freeport, TX 77541 (US)**

(74) Representative: **Boult Wade Tennant LLP
Salisbury Square House
8 Salisbury Square
London EC4Y 8AP (GB)**

(56) References cited:
**EP-A1- 1 941 999     EP-A1- 2 875 948**

**Description**

**Field**

The present invention relates to uniaxially oriented, multi-layered films and in particular, to multi-layered films oriented in the machine direction. Such films can be particularly useful in articles such as flexible packaging.

**Introduction**

Polyethylene films are widely used in flexible packaging, such as heavy duty shipping sacks, stand-up pouches, detergent pouches, sachets, etc. Depending on the application, a variety of properties may be needed in terms of integrity and/or attractiveness. Such properties can include: (1) excellent optical properties, such as high gloss, high clarity and low haze; (2) sufficient abuse resistance, such as high tensile strength, high puncture, stiffness and impact resistance; and/or (3) good sealing properties, such as low seal initiation temperature, broad sealing window, high seal strength and high hot tack.

EP-A-2,875,948 discloses a multilayer machine direction oriented film comprising at least an (A) layer and (B) layer, at least one of said (A) layer or (B) layer comprising at least 50 wt% of a multimodal linear low density polyethylene (LLDPE) having a density of 905 to 940 kg/m³ and an MFR$_2$ of 0.01 to 20 g/10 min which comprises a low molecular weight (LMW) component and a higher molecular weight (HMW) component; wherein said LMW component is an ethylene homopolymer and said HMW component is an ethylene polymer of ethylene with at least two C4-C12 alpha olefins; wherein said film is a stretched film which is unaxially oriented in the machine direction (MD) in a draw ratio of at least 1:3 and has a film thickness of at least 40 μm (microns) (after stretching) and wherein said film does not comprise a layer in which more than 30 wt% of said layer comprises a polymer component having a melting point (T$_m$) of 100 °C or less.

EP-A-1,941,999 provides a uniaxially oriented multilayer film comprising at least: (i) an outer layer (B) and (ii) an inner layer (C), wherein said layer (B) (i) comprises a multimodal linear low density polyethylene (LLDPE), said layer (C) (ii) comprises at least one polymer component which is in the form of a stretched film which is uniaxially oriented in the machine direction (MD) in a draw ratio of at least 1:3.

Conventional blown or cast polyethylene films were widely used in flexible packaging, either as stand-alone packaging or lamination film. With market trends towards sustainability, flexible packaging continues to be down gauged. Polyethylene films used in packaging applications have been down gauged using different methods by film converters and others in search of thinner, tougher, stiffer and lower cost solutions to their needs and their customers' needs. For example, very tough linear low density polyethylene resins with fractional melt indices and stiff high density polyethylene resins have been used in blends or coextrusion combinations to make films that seek to balance stiffness and toughness. Likewise, blown film and cast film processes have been optimized to provide films that seek to balance optical properties with film gauge and toughness. However, there are limits on how thin the films can be without sacrificing toughness, tear strength, and/or stiffness required for conversion processes, bagging operations, and/or end use functional performance.

Biaxially oriented films (e.g., biaxially oriented polypropylene films and biaxially oriented polyethylene films) and cast polypropylene films have been found to provide good stiffness and toughness while down gauging in some instances.

Machine direction oriented (MDO) films are another approach to providing stiffness and optical properties to films. However, when oriented significantly in the machine direction (e.g., at draw ratios of 6:1 to 10:1), such films can become weak in tear strength in the machine direction due to the unidirectional orientation. As films are stretched at high ratios in the machine direction, the films are expected to more likely exhibit fibrillation in the machine direction and/or significant drops in tear strength in the machine direction.

It would thus be desirable to have new machine direction oriented films that provide significant down gauging while providing desirable mechanical properties.

**Summary**

The present invention provides uniaxially oriented films comprising a plurality of layers with combinations of polyolefins that in some aspects, can be processed (e.g., oriented) more effectively and provide desirable mechanical properties. For example, in some aspects, films of the present invention exhibit limited drop in tear strength after orientation in the machine direction. As another example, in some aspects, films of the present invention can exhibit high 2% secant moduli values while maintaining desirable tear strength in the machine direction.

In another aspect, the present invention provides a uniaxially oriented film that comprises (a) a first layer comprising a polyolefin plastomer having a density of 0.865 to 0.908 g/cm³ and a melt index (I$_2$) of 0.5-6 g/10 minutes, and at least one of a single-site catalyzed linear low density polyethylene having a density of 0.912 g/cm$^3$ to 0.935 g/cm$^3$ and a melt index (I$_2$) of 0.5 to 6 g/10 minutes, or a Ziegler-Natta catalyzed ultra low density polyethylene having a density of 0.880 g/cm$^3$ to 0.912 g/cm$^3$, a melt index (I$_2$) of 0.5 to 6 g/10 minutes, and a MWD of 6.0 or less; (b) a second layer comprising a Ziegler-Natta catalyzed ultra low density polyethylene having a density of 0.880 g/cm$^3$ to 0.912 g/cm$^3$, a melt index (I$_2$) of 0.5 to 6 g/10 minutes, and a MWD of 6.0 or less; and (c) at least one inner layer between the first layer and the second layer comprising at least one polyolefin, wherein the film is oriented in the machine direction at a draw ratio of between 4:1 and 10:1, and wherein the film exhibits a machine direction 2% secant modulus of 586 MPa (85,000 psi) or more when measured as per ASTM D882.

Embodiments of the present invention also provide articles (e.g., flexible packages, pouches, stand-up pouches, etc.) formed from the films disclosed herein. Embodiments of the present invention also provide laminates comprising one or more of the films disclosed herein.

These and other embodiments are described in more detail in the Detailed Description.

## Detailed Description

Unless specified otherwise herein, percentages are weight percentages (wt%) and temperatures are in °C.

The term "composition," as used herein, includes material(s) which comprise the composition, as well as reaction products and decomposition products formed from the materials of the composition.

The term "comprising," and derivatives thereof, is not intended to exclude the presence of any additional component, step or procedure, whether or not the same is disclosed herein. In order to avoid any doubt, all compositions claimed herein through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. Trace amounts of impurities may be incorporated into and/or within the polymer.

The term "interpolymer," as used herein, refers to a polymer prepared by the polymerization of at least two different types of monomers. The generic term interpolymer thus includes copolymers (employed to refer to polymers prepared from two different types of monomers), and polymers prepared from more than two different types of monomers. The term "polymer", as used herein, refers to a polymeric compound prepared by polymerizing monomers, whether of the same or a different type. The generic term polymer thus embraces the term "homopolymer", usually employed to refer to polymers prepared from only one type of monomer as well as "copolymer" which refers to polymers prepared from two or more different monomers.

"Polyethylene" or "ethylene-based polymer" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); Medium Density Polyethylene (MDPE); and High Density Polyethylene (HDPE). These polyethylene materials are generally known in the art; however the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 100 MPa (14,500 psi) with the use of free-radical initiators, such as peroxides (see for example US 4,599,392, which is hereby incorporated by reference). LDPE resins typically have a density in the range of 0.916 to 0.935 g/cm$^3$.

The term "LLDPE", includes both resin made using the traditional Ziegler-Natta catalyst systems as well as single-site catalysts including, but not limited to, bis-metallocene catalysts (sometimes referred to as "m-LLDPE") and constrained geometry catalysts, and includes linear, substantially linear or heterogeneous polyethylene copolymers or homopolymers. LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The LLDPEs can be made via gas-phase, solution-phase or slurry polymerization or any combination thereof, using any type of reactor or reactor configuration known in the art, with gas and slurry phase reactors being most preferred.

The term "MDPE" refers to polyethylenes having densities from 0.926 to 0.935 g/cm$^3$. "MDPE" is typically made using chromium or Ziegler-Natta catalysts or using single-site catalysts including, but not limited to, bis-metallocene catalysts and constrained geometry catalysts, and typically have a molecular weight distribution ("MWD") greater than 2.5.

The term "HDPE" refers to polyethylenes having densities greater than about 0.935 g/cm$^3$, which are generally prepared with Ziegler-Natta catalysts, chrome catalysts or single-site catalysts including, but not limited to, bis-metallocene catalysts and constrained geometry catalysts.

The term "ULDPE" refers to polyethylenes having densities of 0.880 to 0.912 g/cm$^3$, which are generally prepared with Ziegler-Natta catalysts, chrome catalysts, or single-site catalysts including, but not limited to, bis-metallocene catalysts and constrained geometry catalysts.

"Multimodal" means resin compositions which can be characterized by having at least two distinct peaks in a GPC chromatogram showing the molecular weight distribution. Multimodal includes resins having two peaks as well as resins having more than two peaks. Multimodal resins generally have a MWD (as defined herein) of greater than 6.0. Related thereto, multimodal resins also generally have $I_{10}/I_2$ values greater than 10. In contrast, the term "unimodal" refers to resin compositions which can be characterized by having one peak in a GPC chromatogram showing the molecular weight distribution. Unimodal resins generally have a MWD of 6.0 or less and $I_{10}/I_2$ values of 12 or less.

Certain polymers are characterized as being prepared in the presence of a "single-site catalyst" or as being "single-site catalyzed." Three major families of high efficiency single-site catalysts (SSC) have been commercially used for the preparation of polyethylene copolymers. These are bis-cyclopentadienyl single-site metallocene catalyst (also known as a Kaminsky catalyst), a half sandwich, constrained geometry mono-cyclopentadienyl single-site catalyst (known as a Constrained Geometry Catalyst, CGC, under the trademark of INSITE™ technology by The Dow Chemical Company), and post-metallocene catalysts. It should be understood that polymers characterized as being prepared in the presence of a single-site catalyst or as single-site catalyzed were prepared in the presence of one or more of such catalysts.

Unless otherwise indicated herein, the following analytical methods are used in the describing aspects of the present invention:

"Density" is determined in accordance with ASTM D792.

"Melt index": Melt indices $I_2$ (or 12) and $I_{10}$ (or 110) are measured in accordance with ASTM D-1238 at 190° C and at 2.16 kg and 10 kg load, respectively. Their values are reported in g/10 min. "Melt flow rate" is used for polypropylene based resins and determined according to ASTM D1238 (230° C at 2.16 kg).

"Peak melting point" is determined by a Differential Scanning Calorimeter (DSC) where the film is conditioned at 230° C for 3 minutes prior to cooling at a rate of 10° C per minute to a temperature of -40° C. After the film is kept at -40° C for 3 minutes, the film is heated to 200° C at a rate of 10° C per minute.

"VICAT softening point" is measured according to ASTM D 1525

"Percent crystallinity by weight" is calculated according to Equation 1:

$$\text{Crystallinity (wt. \%)}=\Delta H/\Delta H_o \times 100\%, \qquad (Eq.\ 1)$$

where the heat of fusion ($\Delta H$) is divided by the heat of fusion for the perfect polymer crystal ($\Delta H_o$) and then multiplied by 100%. For ethylene crystallinity, the heat of fusion for a perfect crystal is taken to be 290 J/g. For example, an ethylene-octene copolymer which upon melting of its polyethylene crystallinity is measured to have a heat of fusion of 29 J/g; the corresponding crystallinity is 10 wt %. For propylene crystallinity, the heat of fusion for a perfect crystal is taken to be 165 J/g. For example, a propylene-ethylene copolymer which upon melting of its propylene crystallinity is measured to have a heat of fusion of 20 J/g; the corresponding crystallinity is 12.1 wt %. "Heat of fusion" is obtained using a DSC thermogram obtained by model Q1000 DSC from TA Instruments, Inc. (New Castle, Del.). Polymer samples are pressed into a thin film at an initial temperature of 190° C (designated as the "initial temperature"). About 5 to 8 mg of sample is weighed out and placed in the DSC pan. The lid is crimped on the pan to ensure a closed atmosphere. The DSC pan is placed in the DSC cell and then heated at a rate of about 100° C/minute to a temperature ($T_o$) of about 60° C above the melt temperature of the sample. The sample is kept at this temperature for about 3 minutes. Then the sample is cooled at a rate of 10° C/minute to -40° C, and kept isothermally at that temperature for 3 minutes. The sample is then heated at a rate of 10° C/minute until complete melting. Enthalpy curves resulting from this experiment are analyzed for peak melt temperature, onset and peak crystallization temperatures, heat of fusion and heat of crystallization, and any other DSC analyses of interest.

The term molecular weight distribution or "MWD" is defined as the ratio of weight average molecular weight to number average molecular weight ($M_w/M_n$). $M_w$ and $M_n$ are determined according to methods known in the art using conventional gel permeation chromatography (GPC).

2% secant modulus is measured according to ASTM D882.

Elmendorf tear strength is measured according to ASTM D1922.

Additional properties and test methods are described further herein.

In one aspect, a uniaxially oriented film of the present inventions comprise (a) a first layer comprising a polyolefin plastomer having a density of 0.865 to 0.908 g/cm$^3$ and a melt index ($I_2$) of 0.5-6 g/10 minutes, and at least one of a single-site catalyzed linear low density polyethylene having a density of 0.912 g/cm$^3$ to 0.935 g/cm$^3$ and a melt index ($I_2$) of 0.5 to 6 g/10 minutes, or a Ziegler-Natta catalyzed ultra low density polyethylene having a density of 0.880 g/cm$^3$ to 0.912 g/cm$^3$, a melt index ($I_2$) of 0.5 to 6 g/10 minutes, and a MWD of 6.0 or less; (b) a second layer comprising a Ziegler-Natta catalyzed ultra low density polyethylene having a density of 0.880 g/cm$^3$ to 0.912 g/cm$^3$, a melt index ($I_2$) of 0.5 to 6 g/10 minutes, and a MWD of 6.0 or less; and (c) at least one inner layer between the first layer and the second layer comprising at least one polyolefin, wherein the film is oriented in the machine direction at a draw ratio of between 4:1 and 10:1, and wherein the film exhibits a machine direction 2% secant modulus of 586 MPa (85,000 psi) or more when measured as per ASTM D882. In some embodiments, the ultra low density polyethylene in the first layer has a VICAT softening point of 100° C or less.

In some embodiments, the polyolefin plastomer comprises a polyethylene plastomer, a polypropylene plastomer, or combinations thereof.

The first layer comprises less than 50% by weight of the polyolefin plastomer and greater than 50% by weight of the single-site catalyzed linear low density polyethylene in some embodiments.

In some embodiments, the at least one inner layer comprises (i) a Ziegler-Natta catalyzed ultra low density polyethylene having a density of 0.880 g/cm$^3$ to 0.912 g/cm$^3$ and a melt index ($I_2$) of 0.5 to 6 g/10 minutes, and (ii) a first composition comprising an ethylene-based polymer prepared in the presence of a single-site catalyst, wherein the composition has a density of 0.930 g/cm$^3$ to 0.945 g/cm$^3$ and a melt index ($I_2$) of 0.5 to 6 g/10 minutes. The at least one inner layer, in a further embodiment, can comprise greater than 50% by weight of the ultra low density polyethylene and less than 50% by weight of the first composition. In some embodiments, the at least one inner layer comprises a single-site catalyzed linear low density polyethylene having a density of 0.912 g/cm$^3$ to 0.935 g/cm$^3$ and a melt index ($I_2$) of 0.5 to 6 g/10 minutes.

In some aspects, the first and/or second layers of the uniaxially oriented films can be outer layers. In some embodiments, uniaxially oriented films of the present invention have a thickness of 100 μm (microns) or less. In some embodiments, uniaxially oriented films of the present invention have a thickness of 10 μm (microns) or more. Uniaxially oriented films of the present invention can comprise more than 3 layers in some embodiments. For example, in some embodiments, uniaxially oriented films of the present invention can comprise up to nine layers.

Uniaxially oriented films of the present invention, in some embodiments, can exhibit one or more physical properties that may be desirable. In some embodiments, uniaxially oriented films of the present invention exhibit a normalized Elmendorf tear strength in the machine direction of 5.85 g/μm (150) to 17.6 g/μm (450 grams/mil) when measured as per ASTM D1922. Films of the present invention, in some embodiments, exhibit a machine direction 2% secant modulus of 1034 MPa (150,000 psi) or more when measured as per ASTM D882. In some embodiments, the 2% secant modulus can be 1379 MPa (200,000 psi) or more. Uniaxially oriented films of the present invention, in some embodiments, can be substantially flat.

Embodiments of the present invention also provide articles formed from any of the uniaxially oriented films described herein. Examples of such articles can include flexible packages, pouches, stand-up pouches, and pre-made packages or pouches.

Some embodiments of the present invention comprise laminates formed from any uniaxially oriented films described herein. In some embodiments, two or more uniaxially oriented films as described herein are sealed to each other to form the laminate. In other embodiments, a laminate can be formed from a single blown film. In such embodiments, the inner surface of the blown film can collapse and seal on itself to form a laminate having a thickness approximately twice the thickness of the blown film prior to forming the laminate. In some embodiments, machine direction oriented laminates of the present invention can have a thickness of 20 to 100 μm (microns), of 40 to 100 μm (microns), or of 20 to 50 μm (microns).

First Layer

In describing a first layer of a uniaxially oriented film of the present invention, it should be understood that the term "first" is used to identify the layer within the context of the other layers in the film. Nonetheless, in some embodiments, the first layer is an outer layer of the film.

In other embodiments, a first layer of a uniaxially oriented film of the present invention comprises a polyolefin plastomer having a density of 0.865 to 0.908 g/cm$^3$ and a melt index ($I_2$) of 0.5-6 g/10 minutes, and at least one of a single-site catalyzed LLDPE having a density of 0.912 g/cm$^3$ to 0.935 g/cm$^3$ and a melt index ($I_2$) of 0.5 to 6 g/10 minutes, or a Ziegler-Natta catalyzed ULDPE having a density of 0.880 g/cm$^3$ to 0.912 g/cm$^3$, a melt index ($I_2$) of 0.5 to 6 g/10 minutes, and a MWD of 6.0 or less. The polyolefin plastomer can be a polyethylene plastomer, a polypropylene plastomer, or combinations thereof.

The polyolefin plastomer has a density of 0.865 g/cm$^3$ to 0.908 g/cm$^3$. All individual values and subranges from 0.865 g/cm$^3$ to 0.908 g/cm$^3$ are included herein and disclosed herein; for example, the density of the polyolefin plastomer can be from a lower limit of 0.865, 0.870, 0.875 0.880, 0.885, or 0.890 g/cm$^3$ to an upper limit of 0.880, 0.885, 0.890, 0.895, 0.900, 0.905 or 0.908 g/cm$^3$. In some embodiments, the polyolefin plastomer has a density from 0.870 to 0.908 g/cm$^3$, preferably 0.885 to 0.905 g/cc, more preferably 0.895 to 0.903 g/cc.

In some embodiments, the polyolefin plastomer has a melt index ($I_2$) of up to 6.0 g/10 minutes. All individual values and subranges up to 6.0 g/10 minutes are included herein and disclosed herein. For example, the polyolefin plastomer can have a melt index to an upper limit of 0.9, 1.0, 1.5, 2.0, 3.0, 4.0, 4.5, 5.0, 5.5, or 6.0 g/10 minutes. In a particular aspect of the invention, the polyolefin plastomer has an $I_2$ with a lower limit of 0.5 g/10 minutes. All individual values and subranges from 0.5 g/10 to 6.0 g/10 minutes are included herein and disclosed herein. The melt index ($I_2$) of the polyolefin plastomer is preferably 0.5 to 3.0 g/10 minutes.

Examples of polyolefin plastomers that can be used in the first layer include those commercially available from The Dow Chemical Company under the name AFFINITY™ including, for example, AFFINITY™ PL 1881G, AFFINITY™ PL 1888G, AFFINITY™ PF 1140G, AFFINITY™ PF1146G, and AFFINITY™ PF 1850G.

As noted above, in embodiments where the first layer comprises a polyolefin plastomer, the first layer can further comprise a Ziegler-Natta catalyzed ULDPE and/or a single-site catalyzed LLDPE. The Ziegler-Natta catalyzed ULDPE, in some embodiments, has a density of 0.880 g/cm$^3$ to 0.912 g/cm$^3$, a melt index ($I_2$) of 0.5 to 6 g/10 minutes, and a MWD of 6.0 or less.

In embodiments where the first layer comprises polyolefin plastomer and a Ziegler-Natta catalyzed ULDPE, the Ziegler-Natta catalyzed ULDPE has a density of 0.880 g/cm$^3$ to 0.912 g/cm$^3$. All individual values and subranges from 0.880 g/cm$^3$ to 0.912 g/cm$^3$ are included herein and disclosed herein; for example, the density of the Ziegler-Natta catalyzed ULDPE can be from a lower limit of 0.880, 0.885, 0.890 or 0.895 g/cm$^3$ to an upper limit of 0.900, 0.905, 0.910, or 0.912 g/cm$^3$. In some embodiments, the Ziegler-Natta catalyzed ULDPE has a density from 0.890 to 0.912 g/cm$^3$, preferably 0.890 to 0.908 g/cc, more preferably 0.9 to 0.905 g/cc.

In some embodiments, the Ziegler-Natta catalyzed ULDPE has a melt index ($I_2$) of up to 6.0 g/10 minutes. All individual values and subranges up to 6.0 g/10 minutes are included herein and disclosed herein. For example, the Ziegler-Natta catalyzed ULDPE can have a melt index to an upper limit of 1.0, 1.5, 2.0, 2.5, 3.0 3.5, 4.0, 4.5, 5.0, 5.5, or 6.0 g/10 minutes. In a particular aspect of the invention, the Ziegler-Natta catalyzed ULDPE has an $I_2$ with a lower limit of 0.5 g/10 minutes. All individual values and subranges from 0. 5 g/10 to 6.0 g/10 minutes are included herein and disclosed herein.

In some embodiments, the Ziegler-Natta catalyzed ULDPE is unimodal. In some embodiments, the Ziegler-Natta catalyzed ULDPE has a MWD of 6.0 or less, preferably 5.5 or less.

Examples of Ziegler-Natta catalyzed ULDPEs that can be used in the first layer include those commercially available from The Dow Chemical Company under the names ATTANE™ and FLEXOMER™ (a VLDPE) including, for example, ATTANE™ 4203, ATTANE™ 4201, ATTANE™ NG 4701, ATTANE™ SL 4101, FLEXOMER™ ETS-9064, FLEXOMER™ ETS-9066, and FLEXOMER™ DFDA 1137.

In embodiments where the first layer comprises polyolefin plastomer and a single-site catalyzed LLDPE, the single-site catalyzed LLDPE has a density of 0.912 g/cm$^3$ to 0.935 g/cm$^3$. All individual values and subranges from 0.912 g/cm$^3$ to 0.935 g/cm$^3$ are included herein and disclosed herein; for example, the density of the single-site catalyzed LLDPE can be from a lower limit of 0.912, 0.915, 0.920, or 0.925 g/cm$^3$ to an upper limit of 0.920, 0.925, 0.930, or 0.935 g/cm$^3$. In some embodiments, the single-site catalyzed LLDPE has a density from 0.915 to 0.935 g/cm$^3$, preferably 0.915 to 0.926 g/cc.

In some embodiments, the single-site catalyzed LLDPE has a melt index ($I_2$) of up to 6.0 g/10 minutes. All individual values and subranges up to 6.0 g/10 minutes are included herein and disclosed herein. For example, the single-site catalyzed LLDPE can have a melt index to an upper limit of 1.0, 1.5, 2.0, 2.5, 3.0, 3.5, 4.0, 4.5, 5.0, 5.5, or 6.0 g/10 minutes. In a particular aspect of the invention, the single-site catalyzed LLDPE has an $I_2$ with a lower limit of 0.5 g/10 minutes. All individual values and subranges from 0. 5 g/10 to 6.0 g/10 minutes are included herein and disclosed herein.

Examples of single-site catalyzed LLDPEs that can be used in the first layer include those commercially available from The Dow Chemical Company under the names AFFINITY™ AND ELITE™.

In some embodiments wherein the first layer comprises a polyolefin plastomer and a single-site catalyzed LLDPE, the first layer can comprise less than 50% by weight of the polyolefin plastomer and greater than 50% by weight of the single-site catalyzed LLDPE, preferably less than 45% by weight of the polyolefin plastomer and greater than 55% by weight of the single-site catalyzed LLDPE, or less than 35% by weight of the polyolefin plastomer and greater than 65% by weight of the single-site catalyzed LLDPE. In some embodiments wherein the first layer comprises a polyolefin plastomer and a Ziegler-Natta catalyzed ULDPE, the first layer can comprise less than 50% by weight of the polyolefin plastomer and greater than 50% by weight of the Ziegler-Natta catalyzed ULDPE, preferably less than 45% by weight of the polyolefin plastomer and greater than 50% by weight of the Ziegler-Natta catalyzed ULDPE, or less than 35% by weight of the polyolefin plastomer and greater than 65% by weight of the Ziegler-Natta catalyzed ULDPE.

In embodiments of the present invention incorporating a Ziegler-Natta catalyzed ULDPE in the first layer, the Ziegler-Natta catalyzed ULDPE preferably has a difference between its VICAT softening point and its peak melting point of at least 30° C, preferably at least 40 ° C. This provides a very broad orientation window for orientation which is believed to provide significant stress relaxation and annealing after orienting for improved toughness, tear strength, and/or optics. In some embodiments, the Ziegler-Natta catalyzed ULDPE preferably has a peak melting point of 110° C or more and/or a VICAT softening point of 90° C or less.

Second Layer

In describing a second layer of a uniaxially oriented film of the present invention, it should be understood that the term "second" is used to identify the layer within the context of the other layers in the film. In some embodiments, the second layer is an outer layer of the film. In other embodiments, the second layer is an interior layer, with at least one inner layer being between the first layer and the second layer. For example, in some embodiments, such as a blown film, the film can be blown with the second layer being an inner surface layer, but then allowed to collapse on itself such that an A/B/C structured blown film becomes an A/B/C/C/B/A structured film with A being the first layer, C being the second layer, and B being the inner layer.

In some embodiments, a second layer of the uniaxially oriented film comprises a polyolefin. A variety of polyolefins and combinations of polyolefins can be incorporated into the second layer in various embodiments.

In some embodiments, the second layer can have the same composition as the first layer.

In some embodiments such as when the second layer is the layer on the inside of a blown film (the layer in an A/B/C film structure) and is to collapse on itself to become an A/B/C/C/B/A structured film, the second layer comprises a Ziegler-Natta catalyzed ULDPE having a density of 0.880 $g/cm^3$ to 0.912 $g/cm^3$ and a melt index ($I_2$) of 0.5 to 6.0 g/10 minutes. The Ziegler-Natta catalyzed ULDPE can include any of the Ziegler-Natta catalyzed ULDPEs that are described above in connection with the first layer. In some embodiments, the at least one polyolefin in the second layer comprises 100% by weight of such a Ziegler-Natta catalyzed ULDPE. In some embodiments, the at least one polyolefin in the second layer comprises at least 95% by weight of such a Ziegler-Natta catalyzed ULDPE. The at least one polyolefin in the second layer, in some embodiments, comprises at least 90% by weight of such a Ziegler-Natta catalyzed ULDPE. In embodiments where the second layer comprises less than 100% of the Ziegler-Natta catalyzed ULDPE, other polyethylenes known to those of skill in the art for inclusion in the second layer based on the teachings herein.

Inner Layer

The uniaxially oriented films of the present invention each comprise at least one inner layer. The term "inner" is used to indicate that the inner layer is between the first layer and the second layer. The term "at least one inner layer" is used to indicate that uniaxially oriented films of the present invention can include a single inner layer or multiple inner layers. In some embodiments comprising two or more inner layers, each of the inner layers can have the same composition. In other embodiments comprising two or more inner layers, each of the inner layers can have different compositions, or only some of the inner layers can have the same composition.

With regard to the at least one inner layer, in some embodiments, wherein the first layer comprises a polyolefin plastomer and at least one of a single-site catalyzed LLDPE or a Ziegler-Natta catalyzed ULDPE, and wherein the second layer comprises a Ziegler-Natta catalyzed ULDPE, the at least one inner layer can comprise at least one polyolefin.

In some such embodiments, the at least one inner layer comprises a Ziegler-Natta catalyzed ULDPE having a density of 0.880 $g/cm^3$ to 0.912 $g/cm^3$ and a melt index ($I_2$) of 0.5 to 6 g/10 minutes, and a first composition comprising an ethylene-based polymer prepared in the presence of a single-site catalyst, wherein the composition has a density of 0.930 $g/cm^3$ to 0.945 $g/cm^3$ and a melt index ($I_2$) of 0.5 to 6 g/10 minutes. The Ziegler-Natta catalyzed ULDPE can comprise any of those disclosed above in connection with the first layer.

The first composition has a density of 0.930 $g/cm^3$ to 0.945 $g/cm^3$. All individual values and subranges from 0.930 $g/cm^3$ to 0.945 $g/cm^3$ are included herein and disclosed herein. In some embodiments, the first composition has a melt index ($I_2$) of up to 6.0 g/10 minutes. All individual values and subranges up to 6.0 g/10 minutes are included herein and disclosed herein. For example, the first composition can have a melt index to an upper limit of 1.0, 1.5, 2.0, 2.5, 3.0, 3.5, 4.0, 4.5, 5.0, 5.5, or 6.0 g/10 minutes. In a particular aspect of the invention, the first composition has an $I_2$ with a lower limit of 0.5 g/10 minutes. All individual values and subranges from 0.5 g/10 to 6.0 g/10 minutes are included herein and disclosed herein.

In some embodiments, the first composition comprises a single-site catalyzed MDPE. Another example of a resin that comprises a first composition comprising an ethylene-based polymer prepared in the presence of a single-site catalyst, wherein the composition has a density of 0.930 $g/cm^3$ to 0.945 $g/cm^3$ and a melt index ($I_2$) of 0.5 to 6 g/10 minutes are enhanced polyethylene resins commercially available from The Dow Chemical Company under the name ELITE™ including, for example, ELITE™ 5940.

In some embodiments, wherein the second layer comprises a Ziegler-Natta catalyzed ULDPE and a first composition comprising an ethylene-based polymer prepared in the presence of a single-site catalyst, wherein the composition has a density of 0.930 g/cm$^3$ to 0.945 g/cm$^3$ and a melt index ($I_2$) of 0.5 to 6 g/10 minutes, the second layer can comprise greater than 50% by weight of the Ziegler-Natta catalyzed ULDPE and less than 50% by weight of the first composition, preferably greater than 60% by weight of the ULDPE and less than 40% by weight of the first composition, or greater than 65% by weight of the ULDPE and less than 35% by weight of the first composition.

In other embodiments wherein the first layer comprises a polyolefin plastomer and at least one of a single-site catalyzed LLDPE or a Ziegler-Natta catalyzed ULDPE, and wherein the second layer comprises a Ziegler-Natta catalyzed ULDPE, the at least one inner layer can comprise a single-site catalyzed linear low density polyethylene having a density of 0.912 g/cm$^3$ to 0.935 g/cm$^3$ and a melt index ($I_2$) of 0.5 to 6 g/10 minutes. The single-site catalyzed LLDPE can comprise any of those described above in connection with the first layer.

In other embodiments wherein the first layer comprises a polyolefin plastomer and at least one of a single-site catalyzed LLDPE or a Ziegler-Natta catalyzed ULDPE, and wherein the second layer comprises a Ziegler-Natta catalyzed ULDPE, the at least one inner layer can comprise a Ziegler-Natta catalyzed linear low density polyethylene. The Ziegler-Natta catalyzed LLDPE has a density of 0.912 g/cm$^3$ to 0.935 g/cm$^3$. All individual values and subranges from 0.912 g/cm$^3$ to 0.935 g/cm$^3$ are included herein and disclosed herein; for example, the density of the Ziegler-Natta catalyzed LLDPE can be from a lower limit of 0.912, 0.915, 0.920, or 0.925 g/cm$^3$ to an upper limit of 0.920, 0.925, 0.930, or 0.935 g/cm$^3$. In some embodiments, the Ziegler-Natta catalyzed LLDPE has a density from 0.915 to 0.935 g/cm$^3$, preferably 0.915 to 0.926 g/cc.

In some embodiments, the Ziegler-Natta catalyzed LLDPE has a melt index ($I_2$) of up to 6.0 g/10 minutes. All individual values and subranges up to 6.0 g/10 minutes are included herein and disclosed herein. For example, the Ziegler-Natta catalyzed LLDPE can have a melt index to an upper limit of 1.0, 1.5, 2.0, 2.5, 3.0, 3.5, 4.0, 4.5, 5.0, 5.5, or 6.0 g/10 minutes. In a particular aspect of the invention, the Ziegler-Natta catalyzed LLDPE has an $I_2$ with a lower limit of 0.5 g/10 minutes. All individual values and subranges from 0. 5 g/10 to 6.0 g/10 minutes are included herein and disclosed herein.

Examples of Ziegler-Natta catalyzed LLDPEs that can be used in an inner layer include those commercially available from The Dow Chemical Company under the name DOWLEX™ including, for example, DOWLEX™ 2045. The single-site catalyzed LLDPE can comprise any of those described above in connection with the first layer.

It should be understood that any of the foregoing layers can further comprise one or more additives as known to those of skill in the art such as, for example, antioxidants, ultraviolet light stabilizers, thermal stabilizers, slip agents, antiblock, pigments or colorants, processing aids, crosslinking catalysts, flame retardants, fillers and foaming agents.

Films

A variety of multilayer films can be formed in accordance with the teachings of the present invention. Certain combinations of resins may provide films having certain desirable properties. The multilayer films can have particularly desirable properties when oriented only in the machine direction to provide uniaxially oriented films of the present invention.

A multilayer film can be formed according to any method known in the art. The combinations of resins described herein may be particularly well-suited for formation of multilayer films using blown film processes. When a blown film process is used, the blown film can be formed conventionally (e.g., slit and opened prior to winding), or the blown film can be allowed to collapse so that the interior layer (the second layer as described herein) can laminate to itself to form a multilayer film that is twice as thick. In other words, a blown film process can be configured to form an A/B/C multilayer film, with A corresponding to a first layer, C corresponding to a second layer, and B corresponding to an inner layer between A and C (if the first and second layer are the same composition, the film might also be characterized as an A/B/A film). In a typical process, the multilayer film would have an A/B/C structure. However, if the film were allowed to collapse on itself, the multilayer film would have an A/B/C/C/B/A structure. In either scenario, the multilayer film can later be oriented in the machine direction to provide a uniaxially oriented film of the present invention.

The collapsing method may be desirable in certain situations such as when thicker films are desired. The collapsing method, in some embodiments, can also be advantageous as it facilitates the manufacture of symmetric films oriented in the machine direction without curling. The collapsing method, in some embodiments, can also allow for faster cooling as some cooling of the thinner film occurs prior to collapsing into the thicker film. Another advantage of the collapsing method is that it can provide enhanced barrier properties as a barrier layer (e.g., an oxygen barrier layer or water vapor barrier layer) can be included in the blown film, and then duplicated when the blown film collapses (e.g., a single barrier layer in the blown film becomes two barrier layers upon collapse).

The number of layers in uniaxially oriented films can depend on a number of factors including, for example, the desired properties of the film, the end use application for the film, the desired polymers to be used in each layer, the desired thickness of the film, whether the film is formed by collapsing a blown film, and others. Uniaxially oriented films of the present invention comprise at least three layers. Typical films made with or without collapsing can have up to 9 layers, though collapsing a multilayer blown film can result in more layers (e.g., a 9 layer blown film collapses to form 18 layers). Structures could be, for example, A/B/A (if the outer layers have the same composition), A/B/C, A/B/C/A, A/B/C/D, A/B/C/D/E, A/B/C/D/E/F, A/B/C/D/E/F/G, A/B/C/D/D/C/B/A, A/B/C/D/E/F/G/H, A/B/C/D/E/F/G/H/I, and others. The structures described herein can be used to make films with thicknesses of up to 200 or 250 μm (microns) in a non-collapsed configuration of 3, 5, 7, or 9 layers. A primary limiting factor as to the thickness of the film is the ability to cool such thick films and to make stable bubbles while maintaining a reasonable gauge variation (e.g., +/- 10%).

By collapsing the film and allowing an interior layer to laminate to itself, much thicker films can be made (e.g., a 250 μm (micron) film becomes 500 μm (microns)). Thus, some embodiments relate to blown films that are collapsed to form a thicker film. If such structures are allowed to collapse such that the interior layer collapses on itself, the structures could be, for example, A/B/C/C/B/A, A/B/C/D/D/C/B/A, A/B/C/D/E/E/D/C/B/A, A/B/C/D/E/F/G/G/F/E/D/C/B/A, and others. In embodiments where collapsing is desired, the composition of the second layer (as described above, not the second layer in the film structure itself), can be selected so as to facilitate its lamination to itself during the blown film process.

Forming the blown film using a collapsing method can provide several advantages. As indicated above, a blown film can be made that doubles in thickness upon collapsing (e.g., a 50 μm (micron) blown film collapses to make a 100 μm (micron) film; a 100 μm (micron) blown film collapses to make a 200 μm (micron film)). Thus, the collapsing method allows one to initially make (i.e., prior to collapsing) relatively thinner and symmetrically blown films with better cooling efficiency, lower film crystallinity and better optics compared to a non-collapsed film having a thickness comparable to the film after collapsing. The collapsing method also advantageously provides, in some embodiments, substantially flat films after collapsing. The ability to make very thick films (e.g., up to 400 or 500 μm (microns) in some embodiments) can provides advantage when the film is then oriented in the machine direction. For example, a 400 or 500 μm (micron) film can be oriented in the machine direction at a stretch ratio of 4:1 or 5:1 to provide a 100 μm (micron) film for heavy duty bag applications. Or, such a film could oriented in the machine direction at a stretch ratio of up to 10:1 to provide a very stiff fill of 40-50 μm (microns) which might be used in tape or label applications.

While forming thicker films by allowing a blown film to collapse on itself, other embodiments relate to films formed by later laminating two or more existing films to one another. For example, two or more films having the same structure can be prepared using a cast film process and then laminated to simulate the symmetric collapsed structures described above. The two films can each have a contact layer with a relatively low melting point such that the films can pass over a hot roll that heats the films and thermally laminates them together. The two films also could be laminated together with an adhesive. When the two films having the same structure are laminated together, the laminated film can simulate what occurs when a blown film is collapsed.

Once formed, multilayer films are then oriented in the machine direction only so as to provide uniaxially oriented films of the present invention. The film web can be oriented in the machine direction only using techniques known to those of skill in the art, such as a tenter frame process. The film can be oriented at a draw ratio of 4:1 to 10:1 in embodiments of the present invention. In some embodiments, the film can be oriented at a draw ratio of 5:1 to 9:1. The draw ratio will impact the thickness of the uniaxially oriented film, in addition to the original thickness and whether the film is collapsed. For example, a multilayer film having an initial thickness of 200 μm (microns), can be collapsed to a thickness of 400 μm (microns), and then oriented in the machine direction to thicknesses of 40 μm (microns) (with a draw ratio of 10:1), of 50 μm (microns) (with a draw ratio of 8:1), of 100 μm (microns) (with a draw ratio of 4:1), or others. As another example, a multilayer film having an initial thickness of 125 μm (microns), can be collapsed to a thickness of 250 μm (microns), and then oriented in the machine direction to thicknesses of 25 μm (microns) (with a draw ratio of 10:1), of 50 μm (microns) (with a draw ratio of 5:1), or others. As another example, a multilayer film having an initial thickness of 100 μm (microns), can be collapsed to a thickness of 200 μm (microns), and then oriented in the machine direction to thicknesses of 20 μm (microns) (with a draw ratio of 10:1), of 40 μm (microns) (with a draw ratio of 5:1), or others. Thus, uniaxially oriented films of the present invention can permit a significant amount of orientation in the machine direct while still maintaining a significant range of potential film thicknesses.

This amount of orientation combined with the composition of the different layers in the film as described herein can provide uniaxially oriented films having one or more desirable properties. In some embodiments, uniaxially oriented films of the present invention can exhibit a machine direction 2% secant modulus of 517 MPa (75,000psi) or more when measured as per ASTM D882. Uniaxially oriented films, in some embodiments of the present invention, can exhibit a machine direction 2% secant modulus of 690 MPa (100,000 psi) or more when measured as per ASTM D882. Uniaxially oriented films of the present invention can exhibit a machine direction 2% secant modulus of 1034 MPa (150,000 psi) or more when measured as per ASTM D882 in some embodiments. Uniaxially oriented films, in some embodiments, of the present invention can exhibit a machine direction 2% secant modulus of 1379 MPa (200,000 psi) or more when measured as per ASTM D882.

Uniaxially oriented films of the present invention can also exhibit desirable tear strength values. In some embodiments, uniaxially oriented films of the present invention exhibit a normalized Elmendorf tear strength in the machine direction of 5.85 g/$\mu$m (150) to 17.6 g/$\mu$m (450 grams/mil) when measured as per ASTM D1922. In some embodiments, films of the present invention can exhibit a limited drop in tear strength in the machine direction even after orientation only in the machine direction at draw ratios of greater than 5:1, greater than 6:1, and even up to 9:1.

Uniaxially oriented films of the present invention, in some embodiments, also exhibit high 2% secant modulus in the machine direction (e.g., >1034 MPa (150,000 psi) at a 6:1 draw ratio; >1379 MPa (200,000 psi) at a 8:1 draw ratio, and >1724 MPa (250,000 psi) at a 9:1 draw ratio) while maintaining relatively high normalized Elmendorf tear strength values (e.g., >7.8 g/$\mu$m (200 g/mil)).

In some embodiments, uniaxially oriented films of the present invention are substantially flat. In some embodiments, uniaxially oriented films of the present invention have a gauge variation that is within 5% of the average gauge of the film.

Various embodiments of the present invention contemplate different combinations of resins in different layers of the uniaxially oriented films to provide certain properties. For example, for a collapsed film having good stiffness, high tear resistance, and high sealability, a uniaxially oriented film having an A/B/C/C/B/A structure may comprise an A layer (the first layer) having 40% by weight of the layer of a polyolefin plastomer and 60% by weight of the layer of either a single-site catalyzed LLDPE or a Ziegler-Natta catalyzed ULDPE. The C layer (a second layer) can comprise a Ziegler-Natta catalyzed ULDPE. The B layer (an inner layer between the first layer and second layer) can comprise either 70% by weight of the layer of a Ziegler-Natta catalyzed ULDPE and 30% by weight of the layer of a first composition comprising an ethylene-based polymer prepared in the presence of a single-site catalyst, wherein the composition has a density of 0.930 g/cm$^3$ to 0.945 g/cm$^3$ and a melt index (I$_2$) of 0.5 to 6 g/10 minutes; or 100% of a single-site catalyzed LLDPE or a Ziegler-Natta catalyzed LLDPE. The C layer (a second layer) can comprise 100% by weight of a Ziegler-Natta catalyzed ULDPE in some embodiments. The polyolefin plastomers, the single-site catalyzed LLDPEs, the Ziegler-Natta catalyzed LLDPE, the Ziegler-Natta catalyzed ULDPE, and the first composition comprising an ethylene-based polymer prepared in the presence of a single-site catalyst can be any of those disclosed above in connection with the descriptions of the corresponding layers. The Ziegler-Natta catalyzed ULDPE can be any of those disclosed above in connection with the descriptions of the corresponding layers.

Articles

Embodiments of the present invention also provide articles formed from any of the uniaxially oriented films described herein. Examples of such articles can include flexible packages, pouches, stand-up pouches, and pre-made packages or pouches. Such articles can be formed using techniques known to those of skill in the art in view of the teachings herein.

For example, thin gauge (e.g., 25-35 $\mu$m (micron)), single films having very good optics, stiffness, and sealability, according to some embodiments of the present invention, can be useful in pouches made with form/fill/seal processing equipment. Such pouches can useful for powder and grain pouches holding -250 grams to 1 kilogram. The orientation of the films of the present invention in the machine direction is believed to provide a combination of stiffness, toughness, and optics that is advantageous over conventional blown films.

Uniaxially oriented films having high stiffness and clarity, according to some embodiments of the present invention, can be laminated to one another to provide a laminate formed entirely from polyethylene. As another example, a uniaxially oriented film having high stiffness and clarity, according to some embodiments of the present invention, can be laminated to a stiff, HDPE-rich blown film, and the laminate can be used to form a stand-up pouch formed entirely from polyethylene.

As another example, uniaxially oriented films having high stiffness, high optics, and good tear strength, in some embodiments can be used as a film for candy wrap applications.

**Claims**

1. A uniaxially oriented film comprising:

   (a) a first layer comprising a polyolefin plastomer having a density of 0.865 to 0.908 g/cm$^3$ and a melt index (I$_2$) of 0.5-6 g/10 minutes, and at least one of a single-site catalyzed linear low density polyethylene having a density of 0.912 g/cm$^3$ to 0.935 g/cm$^3$ and a melt index (I$_2$) of 0.5 to 6 g/10 minutes, or a Ziegler-Natta catalyzed ultra low density polyethylene having a density of 0.880 g/cm$^3$ to 0.912 g/cm$^3$, a melt index (I$_2$) of 0.5 to 6 g/10 minutes, and a MWD of 6.0 or less;
   (b) a second layer comprising a Ziegler-Natta catalyzed ultra low density polyethylene having a density of 0.880 g/cm$^3$ to 0.912 g/cm$^3$, a melt index (I$_2$) of 0.5 to 6 g/10 minutes, and a MWD of 6.0 or less; and

(c) at least one inner layer between the first layer and the second layer comprising at least one polyolefin, wherein the film is oriented in the machine direction at a draw ratio of between 4:1 and 10:1, and wherein the film exhibits a machine direction 2% secant modulus of 586 MPa (85,000 psi) or more when measured as per ASTM D882.

2. The uniaxially oriented film of claim 1, wherein the first layer comprises less than 50 % by weight of the polyolefin plastomer and greater than 50 % by weight of the single-site catalyzed linear low density polyethylene.

3. The uniaxially oriented film of claim 1 or claim 2, wherein the at least one inner layer comprises one of the following:

(a) (i) a Ziegler-Natta catalyzed ultra low density polyethylene having a density of 0.880 $g/cm^3$ to 0.912 $g/cm^3$ and a melt index ($I_2$) of 0.5 to 6 g/10 minutes, and (ii) a first composition comprising an ethylene-based polymer prepared in the presence of a single-site catalyst, wherein the composition has a density of 0.930 $g/cm^3$ to 0.945 $g/cm^3$ and a melt index ($I_2$) of 0.5 to 6 g/10 minutes; or
(b) a single-site catalyzed linear low density polyethylene having a density of 0.912 $g/cm^3$ to 0.935 $g/cm^3$ and a melt index ($I_2$) of 0.5 to 6 g/10 minutes; or
(c) a Ziegler-Natta catalyzed liner low density polyethylene having a density of 0.912 $g/cm^3$ to 0.935 $g/cm^3$ and a melt index ($I_2$) of 0.5 to 6 g/10 minutes.

4. The uniaxially oriented film of any of the preceding claims, wherein the first layer and the second layer are outer layers of the film.

5. The uniaxially oriented film of any of the preceding claims, wherein the film has a thickness of 100 $\mu$m (microns) or less.

6. The uniaxially oriented film of any of the preceding claims, wherein the film exhibits a normalized Elmendorf tear strength in the machine direction of 5.85 $g/\mu$m (150) to 17.6 $g/\mu$m (450 grams/mil) when measured as per ASTM D1922.

7. The uniaxially oriented film of any of the preceding claims, wherein the film comprises up to nine layers.

8. The uniaxially oriented film of any of the preceding claims, wherein the film exhibits a machine direction 2% secant modulus of 1034 MPa (150,000 psi) or more when measured as per ASTM D882.

9. A food package comprising the uniaxially oriented film of any of claims 1-8.

10. A laminate comprising a first uniaxially oriented film according to any of claims 1-8 and a second uniaxially oriented film according to any of claims 1-8, wherein the first layers of the first and second uniaxially oriented films are outer layers, wherein the second layers of the first and second uniaxially oriented films are sealed to each other, and wherein the first uniaxially oriented film and the second uniaxially oriented film are formed from a single blown film.

**Patentansprüche**

1. Eine einachsig ausgerichtete Folie, die Folgendes beinhaltet:

(a) eine erste Schicht, die ein Polyolefinplastomer, das eine Dichte von 0,865 bis 0,908 $g/cm^3$ und einen Schmelzindex ($I_2$) von 0,5-6 g/10 Minuten aufweist, und mindestens eines von einem Single-Site-katalysierten linearen Polyethylen niedriger Dichte, das eine Dichte von 0,912 $g/cm^3$ bis 0,935 $g/cm^3$ und einen Schmelzindex ($I_2$) von 0,5 bis 6 g/10 Minuten aufweist, oder einem Ziegler-Nattakatalysierten Polyethylen ultraniedriger Dichte, das eine Dichte von 0,880 $g/cm^3$ bis 0,912 $g/cm^3$, einen Schmelzindex ($I_2$) von 0,5 bis 6 g/10 Minuten und eine MGV von 6,0 oder weniger aufweist, beinhaltet;
(b) eine zweite Schicht, die ein Ziegler-Natta-katalysiertes Polyethylen ultraniedriger Dichte, das eine Dichte von 0,880 $g/cm^3$ bis 0,912 $g/cm^3$, einen Schmelzindex ($I_2$) von 0,5 bis 6 g/10 Minuten und eine MGV von 6,0 oder weniger aufweist, beinhaltet; und
(c) mindestens eine innere Schicht zwischen der ersten Schicht und der zweiten Schicht, die mindestens ein Polyolefin beinhaltet,

wobei die Folie in Maschinenrichtung bei einem Ziehverhältnis von zwischen 4 : 1 und 10:1 ausgerichtet ist und wobei die Folie einen 2-%-Biegemodul in Maschinenrichtung von 586 MPa (85 000 psi) oder mehr zeigt, wenn gemäß ASTM D882 gemessen.

2. Einachsig ausgerichtete Folie gemäß Anspruch 1, wobei die erste Schicht zu weniger als 50 Gew.-% das Polyolefinplastomer und zu mehr als 50 Gew.-% das Single-Sitekatalysierte lineare Polyethylen niedriger Dichte beinhaltet.

3. Einachsig ausgerichtete Folie gemäß Anspruch 1 oder Anspruch 2, wobei die mindestens eine innere Schicht eines der Folgenden beinhaltet:

(a) (i) ein Ziegler-Natta-katalysiertes Polyethylen ultraniedriger Dichte, das eine Dichte von 0,880 g/cm$^3$ bis 0,912 g/cm$^3$ und einen Schmelzindex ($I_2$) von 0,5 bis 6 g/10 Minuten aufweist, und (ii) eine erste Zusammensetzung, die ein Polymer auf Ethylenbasis beinhaltet, das in Gegenwart eines Single-Site-Katalysators zubereitet wurde, wobei die Zusammensetzung eine Dichte von 0,930 g/cm$^3$ bis 0,945 g/cm$^3$ und einen Schmelzindex ($I_2$) von 0,5 bis 6 g/10 Minuten aufweist; oder

(b) ein Single-Site-katalysiertes lineares Polyethylen niedriger Dichte, das eine Dichte von 0,912 g/cm$^3$ bis 0,935 g/cm$^3$ und einen Schmelzindex ($I_2$) von 0,5 bis 6 g/10 Minuten aufweist; oder

(c) ein Ziegler-Natta-katalysiertes lineares Polyethylen niedriger Dichte, das eine Dichte von 0,912 g/cm$^3$ bis 0,935 g/cm$^3$ und einen Schmelzindex ($I_2$) von 0,5 bis 6 g/10 Minuten aufweist.

4. Einachsig ausgerichtete Folie gemäß einem der vorhergehenden Ansprüche, wobei die erste Schicht und die zweite Schicht äußere Schichten der Folie sind.

5. Einachsig ausgerichtete Folie gemäß einem der vorhergehenden Ansprüche, wobei die Folie eine Dicke von 100 µm (Mikrometer) oder weniger aufweist.

6. Einachsig ausgerichtete Folie gemäß einem der vorhergehenden Ansprüche, wobei die Folie eine normalisierte Elmendorf-Reißfestigkeit in Maschinenrichtung von 5,85 g/µm (150) bis 17,6 g/µm (450 Gramm/mil) zeigt, wenn gemäß ASTM D1922 gemessen.

7. Einachsig ausgerichtete Folie gemäß einem der vorhergehenden Ansprüche, wobei die Folie bis zu neun Schichten beinhaltet.

8. Einachsig ausgerichtete Folie gemäß einem der vorhergehenden Ansprüche, wobei die Folie einen 2-%-Biegemodul in Maschinenrichtung von 1034 MPa (150 000 psi) oder mehr zeigt, wenn gemäß ASTM D882 gemessen.

9. Eine Lebensmittelverpackung, die die einachsig ausgerichtete Folie gemäß einem der Ansprüche 1-8 beinhaltet.

10. Ein Laminat, das eine erste einachsig ausgerichtete Folie gemäß einem der Ansprüche 1-8 und eine zweite einachsig ausgerichtete Folie gemäß einem der Ansprüche 1-8 beinhaltet, wobei die erste Schicht der ersten einachsig ausgerichteten Folie und die erste Schicht der zweiten einachsig ausgerichteten Folie äußere Schichten sind, wobei die zweite Schicht der ersten einachsig ausgerichteten Folie und die zweite Schicht der zweiten einachsig ausgerichteten Folie miteinander verschweißt sind und wobei die erste einachsig ausgerichtete Folie und die zweite einachsig ausgerichtete Folie aus einer einzigen Blasfolie gebildet sind.

**Revendications**

1. Un film orienté uniaxialement comprenant :

(a) une première couche comprenant un plastomère de polyoléfine ayant une masse volumique de 0,865 à 0,908 g/cm$^3$ et un indice de fluidité ($I_2$) de 0,5 à 6 g/10 minutes, et au moins l'un des éléments parmi un polyéthylène basse densité linéaire obtenu par catalyse à un seul site ayant une masse volumique de 0,912 g/cm$^3$ à 0,935 g/cm$^3$ et un indice de fluidité ($I_2$) de 0,5 à 6 g/10 minutes, ou un polyéthylène ultra basse densité catalysé par catalyse Ziegler-Natta ayant une masse volumique de 0,880 g/cm$^3$ à 0,912 g/cm$^3$, un indice de fluidité ($I_2$) de 0,5 à 6 g/10 minutes, et une distribution des masses moléculaires (MWD) de 6,0 ou moins ;

(b) une deuxième couche comprenant un polyéthylène ultra basse densité catalysé par catalyse Ziegler-Natta ayant une masse volumique de 0,880 g/cm$^3$ à 0,912 g/cm$^3$, un indice de fluidité ($I_2$) de 0,5 à 6 g/10 minutes, et une MWD de 6,0 ou moins ; et

(c) au moins une couche interne entre la première couche et la deuxième couche comprenant au moins une polyoléfine,

le film étant orienté dans le sens machine selon un rapport d'étirage compris entre 4/1 et 10/1, et le film présentant un module sécant à 2 % dans le sens machine de 586 MPa (85 000 psi) ou plus lorsqu'il est mesuré conformément à l'ASTM D882.

2. Le film orienté uniaxialement de la revendication 1, dans lequel la première couche comprend moins de 50 % en poids du plastomère de polyoléfine et plus de 50 % en poids du polyéthylène basse densité linéaire obtenu par catalyse à un seul site.

3. Le film orienté uniaxialement de la revendication 1 ou de la revendication 2, dans lequel l'au moins une couche interne comprend l'un des éléments suivants :

(a) (i) un polyéthylène ultra basse densité catalysé par catalyse Ziegler-Natta ayant une masse volumique de 0,880 g/cm$^3$ à 0,912 g/cm$^3$ et un indice de fluidité ($I_2$) de 0,5 à 6 g/10 minutes, et (ii) une première composition comprenant un polymère à base d'éthylène préparé en présence d'un catalyseur à un seul site, la composition ayant une masse volumique de 0,930 g/cm$^3$ à 0,945 g/cm$^3$ et un indice de fluidité ($I_2$) de 0,5 à 6 g/10 minutes ; ou
(b) un polyéthylène basse densité linéaire obtenu par catalyse à un seul site ayant une masse volumique de 0,912 g/cm$^3$ à 0,935 g/cm$^3$ et un indice de fluidité ($I_2$) de 0,5 à 6 g/10 minutes ; ou
(c) un polyéthylène basse densité linéaire catalysé par catalyse Ziegler-Natta ayant une masse volumique de 0,912 g/cm$^3$ à 0,935 g/cm$^3$ et un indice de fluidité ($I_2$) de 0,5 à 6 g/10 minutes.

4. Le film orienté uniaxialement de n'importe lesquelles des revendications précédentes, dans lequel la première couche et la deuxième couche sont des couches externes du film.

5. Le film orienté uniaxialement de n'importe lesquelles des revendications précédentes, le film ayant une épaisseur de 100 μm (microns) ou moins.

6. Le film orienté uniaxialement de n'importe lesquelles des revendications précédentes, le film présentant une résistance à la déchirure Elmendorf normalisée dans le sens machine de 5,85 g/μm (150) à 17,6 g/μm (450 grammes/mil) lorsqu'elle est mesurée conformément à l'ASTM D1922.

7. Le film orienté uniaxialement de n'importe lesquelles des revendications précédentes, le film comprenant jusqu'à neuf couches.

8. Le film orienté uniaxialement de n'importe lesquelles des revendications précédentes, le film présentant un module sécant à 2 % dans le sens machine de 1 034 MPa (150 000 psi) ou plus lorsqu'il est mesuré conformément à l'ASTM D882.

9. Un emballage alimentaire comprenant le film orienté uniaxialement de n'importe lesquelles des revendications 1 à 8.

10. Un stratifié comprenant un premier film orienté uniaxialement selon n'importe lesquelles des revendications 1 à 8 et un deuxième film orienté uniaxialement selon n'importe lesquelles des revendications 1 à 8, dans lequel les premières couches des premier et deuxième films orientés uniaxialement sont des couches externes, dans lequel les deuxièmes couches des premier et deuxième films orientés uniaxialement sont scellées l'une à l'autre, et dans lequel le premier film orienté uniaxialement et le deuxième film orienté uniaxialement sont formés à partir d'un seul film soufflé.

**EP 3 317 101 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2875948 A
- EP 1941999 A
- US 4599392 A
- US 5272236 A
- US 5278272 A
- US 5582923 A
- US 5733155 A
- US 3645992 A
- US 4076698 A
- US 3914342 A
- US 5854045 A